# EUROPEAN PATENT APPLICATION

(11) **EP 2 531 009 A1**
(43) Date of publication of application: **05.12.2012**
(21) Application number: 12158297.7
(22) Date of filing: 06.03.2012
(51) Int. Cl.: H05B 37/02

(54) **Human sensor apparatus, human sensor system, and lighting control system**

(30) Priority: 31.05.2011 JP 2011122347
(71) Applicant: Toshiba Lighting & Technology Corporation, Yokosuka-shi Kanagawa 237-8510 (JP)
(72) Inventor: Morimoto, Yasushi, Kanagawa, 237-8510 (JP)
(74) Representative: Bokinge, Ole

(57) **Abstract**

According to one embodiment, a human sensor apparatus (14) includes: a human sensor (77)configured to detect the presence of a human body; a terminal section (71) for connecting the human sensor apparatus (14) to a master set (2) to receive supply of electric power to the human sensor (77) and output a detection signal of the human sensor (77) as a first detection signal; and a terminal section (92) for connecting the human sensor apparatus (14) to a master set (3) not to supply electric power to the human sensor (77) and to output the detection signal of the human sensor (77) as a second detection signal electrically insulated from the first detection signal.

## Description

### FIELD

Embodiments described herein relate generally to a human sensor apparatus, a human sensor system, and a lighting control system.

### BACKGROUND

A human sensor has been conventionally set in each of plural lighting areas and, when the human sensor detects a human body, a lighting state of a luminaire set in the lighting area is controlled. For example, when the human sensor detects a human body, the luminaire is fully lit and, when the human sensor does not detect a human body, the luminaire is lit out or dimmed.

Luminous intensity distributions of adjacent lighting areas often overlap each other. When luminaires in lighting areas adjacent to each other near a boundary of the lighting areas are lit out or dimmed, illuminance (brightness) in a portion where the luminous intensity distributions overlap each other runs short. Therefore, a lighting control system is proposed that controls a luminaire in a lighting area of the lighting control system on the basis of detection information of a human sensor in the lighting area and detection information of a human sensor in a lighting area adjacent to the lighting area.

A lighting control system is also proposed in which two master sets can share human sensors set in lighting areas that overlap each other. The lighting control system is configured such that the master sets supply direct-current power to plural human sensors and the human sensors transmit detection signals to the master sets according to current changes via signal lines for the direct-current power.

However, in the case of the system in which the human sensors set in the lighting areas that overlap each other can be shared by the two master sets, the electric power is supplied to the shared one human sensor from the two master sets. Therefore, a signal on the signal line of one master set is susceptible to the influence of a change, for example, noise of a signal on the signal line of the other master set. As a result, detection operations in the master sets become unstable.

### BRIEF DESCRIPTION OF THE DRAWINGS

FIG. 1 is a configuration diagram of a lighting control system according to an embodiment;
FIG. 2 is a diagram for explaining monitoring ranges of human sensors in two sensor systems 10 and 20 according to the embodiment;
FIG. 3 is a configuration diagram of a schematic configuration of the master sets 2 and 3 according to the embodiment;
FIG. 4 is a circuit configuration diagram for explaining the configuration of a slave set according to the embodiment; and
FIG. 5 is a circuit diagram of a slave set shared by three master sets according to the embodiment.

### DETAILED DESCRIPTION

According to one embodiment, a human sensor apparatus includes: a human sensor configured to detect presence of a human body; a first terminal section for connecting the human sensor apparatus to a first master set to receive supply of electric power to the human sensor and output a detection signal of the human sensor as a first detection signal; and a second terminal section for connecting the human sensor apparatus to a second master set not to supply electric power to the human sensor and to output the detection signal of the human sensor as a second detection signal electrically insulated from the first detection signal.

With such a configuration, it is possible to provide a human sensor apparatus shared by at least two master sets, the human sensor apparatus preventing operations of the master sets from becoming unstable.

According to an embodiment, a human sensor system includes plural master sets and plural human sensor apparatuses connected to the master sets. One human sensor apparatus among the plural human sensor apparatuses connected to the plural master sets includes: a human sensor configured to detect presence of a human body; a first terminal section for connecting the human sensor apparatus to a first master set, which is one master set among the plural master sets, to receive supply of electric power to the human sensor from the first master set and output a detection signal of the human sensor as a first detection signal; and a second terminal section for connecting the human sensor apparatus to a second master set, which is another master set among the plural master sets, to output the detection signal of the human sensor as a second detection signal electrically insulated from the first detection signal.

With such a configuration, it is possible to provide a human sensor system including a human sensor apparatus shared by at least two master sets, the human sensor system preventing operations of the master sets from becoming unstable.

According to an embodiment, a lighting control system includes: the human sensor system; a lighting control apparatus connected to the human sensor system, and plural luminaires controlled by the lighting control apparatus. The lighting control apparatus controls the plural luminaires on the basis of the first detection signal and the second detection signal of the human sensor apparatus.

With such a configuration, it is possible to provide a lighting control system including a human sensor apparatus shared by at least two master sets, the lighting control system preventing operations of the master sets from becoming unstable.

In the embodiments, definitions and technical meanings of the terms are as explained below unless specifically designated otherwise.

The human sensor is a human sensor that adopts various detection systems such as detection of an infrared ray and detection of ultrasound. However, a type of the human sensor is not specifically limited.

The terminal section is not limited to a type for screwing a wiring cable of a signal line and may be a connector type. A type of the terminal section is not limited.

The master set only has to be a master set including a function of the master set and may include a human sensor.

The human sensor apparatus desirably includes a detection circuit that generates the first detection signal on the basis of an output of the human sensor and an insulating circuit that is connected to the detection circuit and generates the second detection signal on the basis of the first detection signal.

Consequently, the human sensor apparatus can output, on the basis of an output of the human sensor, the second detection signal electrically insulated from the first detection signal.

The detection circuit is a circuit element such as a transistor. However, the detection circuit is not limited to the circuit element.

The insulating circuit is a circuit such as a photo-coupler or a transformer. However, the insulating circuit is not limited to the circuit.

The human sensor apparatus may further include a third terminal section for connecting the human sensor apparatus to a third master set to output the detection signal of the human sensor as a third detection signal electrically insulated from the first detection signal and the second detection signal.

Consequently, the human sensor apparatus can output, on the basis of an output of the human sensor, the third detection signal electrically insulated from the first detection signal and the second detection signal. Therefore, the human sensor apparatus can output a detection signal to the third master set as well.

An embodiment is explained below with reference to the accompanying drawings.

### (System configuration)

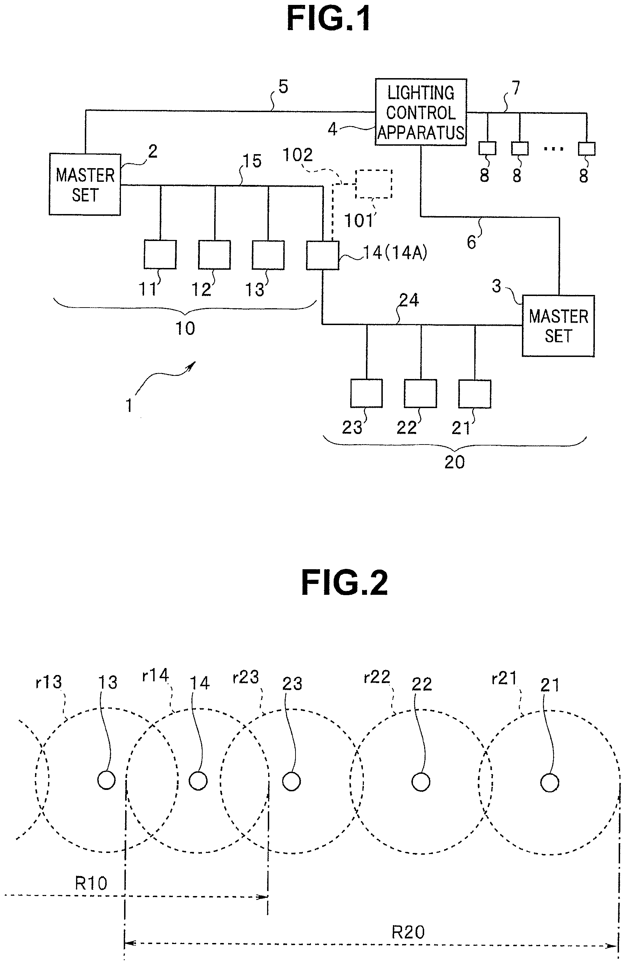

FIG. 1 is a configuration diagram of a lighting control system. A lighting control system 1 includes a human sensor system including a sensor system 10 including a maser set, i.e. master unit, 2 and plural human sensor apparatuses and a sensor system 20 including a master set 3 and plural human sensor apparatuses.

Plural human sensor apparatuses (hereinafter referred to as salve sets) which are slave sets 11, 12, 13, and 14 are connected to the master set 2 via a signal line 15. Plural slave sets 21, 22, 23, and 14 are connected to the master set 3 via a signal line 24. The signal lines 15 and 24 are signal lines of a two-wire type. The master sets and the plural slave sets are connected to the signal lines in a bus connection form. The slave set 14 is a slave set connected to both the master sets 2 and 3 and shared by the systems 10 and 20.

The human sensor system is connected to a lighting control apparatus 4. Specifically, the master sets 2 and 3 are respectively connected to the lighting control apparatus 4 of the lighting control system 1 via signal lines 5 and 6. Plural luminaires 8 are connected to the lighting control apparatus 4. The lighting control apparatus 4 controls ON and OFF or dimming of the luminaires 8 on the basis of human body detection states in the systems 10 and 20.

FIG. 2 is a diagram for explaining monitoring ranges of human sensors in the two sensor systems 10 and 20. In FIG. 2, the slave sets 13, 14, 21, 22, and 23 respectively have human body detection ranges r13, r14, r21, r22, and r23. The slave sets are sensor apparatuses that can detect human bodies present in the detection ranges of the slave sets.

A monitoring range R10 including the detection ranges of the slave sets 11, 12, 13, and 14 relates to the sensor system 10. A monitoring range R20 including the detection ranges of the slave sets 21, 22, 23, and 14 relates to the sensor system 20. The detection ranges are provided to correspond to lighting areas of the luminaires 8. The slave set 14 monitors the detection range r14 related to both the two sensor systems.

The detection ranges do not have to correspond to the lighting areas of the luminaires 8. For example, even if the luminaire 8 that lights the detection range r14 of the slave set 14 is not present, when the slave set 14 detects a human body, the lighting control apparatus 4 can perform lighting control such as control for turning on the luminaire 8 that lights a lighting range adjacent to the detection range r14.

### (Configuration of the master sets)

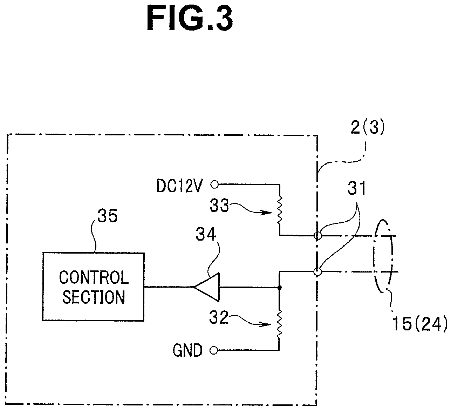

FIG. 3 is a configuration diagram of a schematic configuration of the master sets 2 and 3. The master sets 2 and 3 are respectively connected to the signal lines 15 and 24 via terminal sections 31. The terminal sections 31 are not limited to a type for screwing a wiring cable of a signal line and may be a connection terminal, a connector type, or the like. In FIG. 3, only a circuit section related to the supply of electric power from the master sets to the slave sets and the reception of signals from the slave sets is shown. Circuits having other functions such as communication with the lighting control apparatus 4 are omitted.

The signal lines of the two-wire type are connected to a direct-current power supply between a power supply of 12 V (volts) and the ground (GND). One of the two signal lines (15 and 24) is grounded via a resistor 32. The other is connected to the power supply of 12 V via a resistor 33. One end of the resistor 32 is grounded and the other end is connected to the signal line. The other end of the resistor 32 on the signal line side is connected to an amplifier 34. An output of the amplifier 34 is connected to a control section 35 including a microprocessor. The control section 35 detects current changes on the signal lines 15 and 24.

The master sets 2 and 3 transmit detection signals of the slave sets managed by the master sets 2 and 3 to the lighting control apparatus 4. The lighting control apparatus 4 controls to light or dim the luminaire 8, which corresponds to a place where a detected person is present, to light the place according to predetermined control rules.

Like the slave sets, the master sets 2 and 3 may include human sensors.

### (Configuration of the slave set)

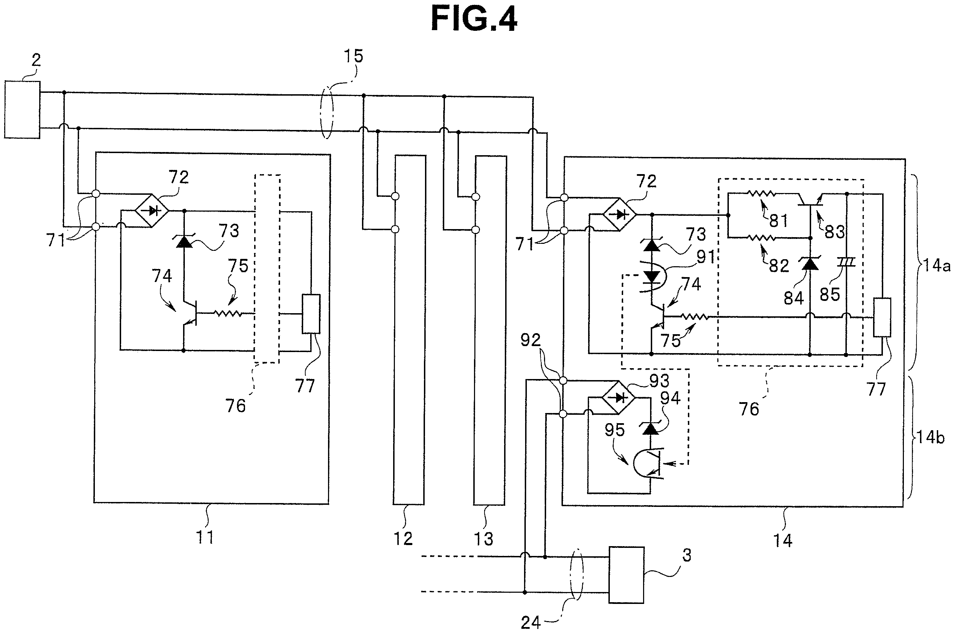

The configuration of the slave set is explained. FIG. 4 is a circuit configuration diagram for explaining the configuration of the slave set.

The slave set 11 is connected to the signal line 15 of the two-wire type by terminal sections 71. The slave set 11 includes the terminal sections 71, a rectifier 72, a Zener diode 73, a transistor 74, a resistor 75, a constant voltage circuit 76, and a human sensor 77.

The terminal sections 71 are not limited to a type for screwing a wiring cable of a signal line and may be a connection terminal, a connector type, or the like.

Input ends of the rectifier 72 are connected to the terminal sections 71 for connection to the signal line 15. A direct-current voltage is input to the slave set 11. A series circuit of the Zener diode 73 and the transistor 74 is connected between output ends of the rectifier 72. The transistor 74 is an NPN type bipolar transistor. The transistor 74 is a detection circuit that generates a detection signal on the basis of an output of the human sensor 77.

An output end of the human sensor 77 is connected to a base of the transistor 74 via the resistor 75. The human sensor 77 is a sensor that detects the presence of a human body. The human sensor 77 receives the supply of electric power from the master set 2 via the terminal sections 71. The human sensor 77 is a sensor that adopts various detection systems such as detection of an infrared ray and detection of ultrasound. When the human sensor 77 detects a human body, the transistor 74 receives the supply of a voltage to the base via the resistor 75 and is turned on. When the transistor 74 is turned on, an electric current flows to the Zener diode 73. A change in the electric current is transmitted to the master set 2 as a detection signal via the signal line 15. In other words, the terminal sections 71 are terminal sections for connecting the slave set 11 to the master set 2 to receive the supply of electric power to the human sensor 77 and output a detection signal of the human sensor 77 as a detection signal.

Further, the slave set 11 includes a constant voltage circuit 76. The constant voltage circuit 76 is a circuit for supplying a substantially constant operating voltage to the human sensor 77 even if an output voltage between the output ends of the rectifier 72 fluctuates.

The constant voltage circuit 76 is provided in the slave set 14 as well. The constant voltage circuit 76 includes resistors 81 and 82, an NPN type bipolar transistor 83, a Zener diode 84, and a smoothing capacitor 85 and is configured as shown in FIG. 4.

The configuration of the other slave sets 12, 13, 21, 22, and 23 is the same as the configuration of the slave set 11.

The configuration of the slave set 14 shared by the two master sets 2 and 3 is explained. In the slave set 14, components same as the components of the slave set 11 are denoted by the same reference numerals and signs and explanation of the components is omitted.

The slave set 14 includes a circuit section 14a for the master set 2 and a circuit section 14b for the master set 3.

The circuit section 14a for the master set 2 includes a series circuit of the Zener diode 73, the transistor 74, and a light-emitting diode 91. As shown in FIG. 4, the light-emitting diode 91 is connected between the Zener diode 73 and the transistor 74.

The circuit section 14b for the master set 3 includes terminal sections 92 for connection to the signal line 24, a rectifier 93, a Zener diode 94, and a photo-transistor 95.

Input ends of the rectifier 93 are connected to the terminal sections 92 for connection to the signal line 24. A direct-current voltage is input to the input ends. A series circuit of the Zener diode 94 and the photo-transistor 95 is connected between output ends of the rectifier 93.

The photo-transistor 95 is arranged in the slave set 14 to receive light emitted by the light-emitting diode 91. The light-emitting diode 91 and the photo-transistor 95 include photo-couplers.

Therefore, when the light-emitting diode 91 emits light, the photo-transistor 95 is turned on and an electric current flows to the Zener diode 94. A change in the electric current is transmitted to the master set 3 as a detection signal via the signal line 24.

The photo-coupler including the light-emitting diode 91 and the photo-transistor 95 is an insulating circuit that is connected to the transistor 74, which is a detection circuit, and generates a detection signal for the master set 3 on the basis of a detection signal of the circuit section 14a.

As the insulating circuit, a transformer may be used instead of the photo-coupler.

Only the electric power from the master set 2 is supplied to the human sensor 77 via the signal line 15. A detection signal of the human sensor 77 is supplied to the master set 2 as a current change via the signal line 15. However, the detection signal of the human sensor 77 is supplied to the master set 3 via the terminal sections 92 by the insulating circuit of the light-emitting diode 91 and the photo-transistor 95 in a state in which the detection signal is insulated from the master set 2.

In other words, the terminal sections 92 are connected to the master set 3 not to supply electric power to the human sensor 77 and to output the detection signal of the human sensor 77 as a detection signal electrically insulated from a detection signal of the circuit section 14a.

As explained above, with the slave set 14 shared by the two master sets 2 and 3 according to the embodiment, it is possible to realize a human sensor apparatus that prevents the operations of the master sets from becoming unstable and a human sensor system and a lighting control system using such a human sensor apparatus.

In the example explained above, two maser sets share one slave set. However, three master sets can share one slave set. In FIG. 1, as indicated by a dotted line, a third master set 101 is connected to a slave set 14A via a signal line 102.

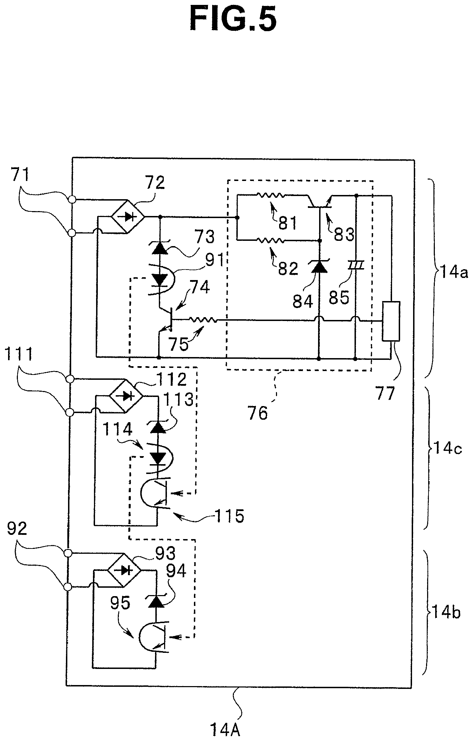

FIG. 5 is a circuit diagram of the slave set 14A shared by three master sets. Components same as the components of the slave set 14 shown in FIG. 4 are denoted by the same reference numerals and signs and explanation of the components is omitted.

As shown in FIG. 5, the slave set 14A shared by the three master sets includes the circuit section 14a for the master set 2, the circuit section 14b for the master set 3, and a circuit section 14c for the master set 101.

As shown in FIG. 5, the configuration of the circuit section 14a for the master set 2 and the circuit section 14b for the master set 3 is the same as the circuit configuration shown in FIG. 4. However, since the slave set 14A includes the circuit section 14c for the master set 101, a connection state between the circuit sections 14a and 14b is different from the connection state shown in FIG. 4.

The circuit section 14c for the master set 101 includes terminal sections 111 for connection to the signal line 102, a rectifier 112, a Zener diode 113, a light-emitting diode 114, and a photo-transistor 115.

Input ends of the rectifier 112 are connected to the terminal sections 111 for connection to the signal line 102. A direct-current voltage is input to the input ends. A series circuit of the Zener diode 113, the light-emitting diode 114, and the photo-transistor 115 is connected between output ends of the rectifier 112.

The photo-transistor 115 is arranged in the slave set 14A to receive light emitted by the light-emitting diode 91. The light-emitting diode 91 and the photo-transistor 115 include photo-couplers.

When the light-emitting diode 91 emits light, the photo-transistor 115 is turned on and an electric current flows to the Zener diode 113 and the light-emitting diode 114. A change in the electric current is transmitted to the master set 101 as a detection signal via the signal line 102 and, at the same time, the light-emitting diode 114 emits light.

The photo-diode 95 of the circuit section 14b is arranged in the slave set 14A to receive light emitted by the light-emitting diode 114. The light-emitting diode 114 and the photo-transistor 95 include photo-couplers.

Therefore, when the light-emitting diode 114 emits light, the photo-transistor 95 is turned on and an electric current flows to the Zener diode 94. A change in the electric current is transmitted to the master set 3 as a detection signal via the signal line 24.

Only the electric power from the master set 2 is supplied to the human sensor 77 via the signal line 15. A detection signal of the human sensor 77 is supplied to the maser set 2 as a current change via the signal line 15. However, the detection signal of the human sensor 77 is supplied to the master set 3 in a state in which the detection signal is insulated from the master set 2 by an insulating circuit of the light-emitting diode 114 and the photo-transistor 95. Similarly, the detection signal of the human sensor 77 is supplied to the master set 101 in a state in which the detection signal insulated from the master sets 2 and 3 by an insulating circuit of the light-emitting diode 91 and the photo-transistor 115.

Specifically, the terminal sections 111 are connected to the mater set 101 not to supply electric power to the human sensor 77 and to output the detection signal of the human sensor 77 as a detection signal electrically insulated from detection signals of the circuit sections 14a and 14b.

Therefore, with the sensor system shown in FIG. 5, in the slave set 14A shared by the three master sets 2, 3, and 101, it is possible to realize a lighting control sensor apparatus that prevents the operations of the master sets from becoming unstable and a lighting control sensor apparatus system and a lighting control system using such a lighting control sensor apparatus.

The slave set connected to the three master sets is explained above. However, a slave set that can be shared by four or more master sets can also be realized by providing a plurality of the circuit sections 14c shown in FIG. 5.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A human sensor apparatus (14) comprising
a human sensor (77) configured to detect presence of a human body; and
a first terminal section (71) for connecting the human sensor apparatus (14) to a first master set (2) to receive the supply of electric power to the human sensor (77) and output a detection signal of the human sensor (77) as a first detection signal; wherein the human sensor apparatus (14) includes a second terminal section (92) for connecting the human sensor apparatus (14) to a second master set (3) not to supply electric power to the human sensor (77) and to output the detection signal of the human sensor (77) as a second detection signal electrically insulated from the first detection signal.

2. The human sensor apparatus according to claim 1, further comprising:
a detection circuit (74) configured to generate the first detection signal on the basis of an output of the human sensor (77); and
insulating circuits (91 and 95) connected to the detection circuit (74) and configured to generate the second detection signal on the basis of the first detection signal.

3. The human sensor apparatus according to claim 2, wherein the insulating circuits (91 and 95) are photo-couplers or transformers.

4. The human sensor apparatus according to claim 2 or 3, wherein the detection circuit (74) is a transistor and, when the human sensor (77) detects the human body, the transistor is turned on to thereby generate the first detection signal.

5. The human sensor apparatus according to any one of claims 1 to 4, further comprising a third terminal section (111) for connecting the human sensor apparatus (14) to a third master set (101) to output the detection signal of the human sensor (77) as a third detection signal electrically insulated from the first detection signal and the second detection signal.

6. The human sensor apparatus according to any one of claims 1 to 5, further comprising a circuit (76) for supplying a constant operating voltage to the human sensor (77).

7. The human sensor apparatus according to claim 6, wherein the circuit (76) is a constant voltage circuit.

8. The human sensor apparatus according to claim 6, further comprising a rectifier (72) connected to the first terminal section (71), wherein
the circuit (76) receives input of an output of the rectifier (72) and supplies the constant operating voltage to the human sensor (77).

9. A human sensor system comprising:
plural human sensor apparatuses including the human sensor apparatus according to any one of claims 1 to 8; and
at least two master sets among the first and second master sets (2 and 3) and a third master set (101).

10. The human sensor system according to claim 9, wherein the one human sensor apparatus (14) further includes:
a detection circuit (74) configured to generate the first detection signal on the basis of an output of the human sensor (77); and
insulating circuits (91 and 95) connected to the detection circuit (74) and configured to generate the second detection signal on the basis of the first detection signal.

11. The human sensor system according to claim 10, wherein the insulating circuits (91 and 95) are photo-couplers or transformers.

12. The human sensor system according to claim 10 or 11, wherein the detection circuit (74) is a transistor and, when the human sensor (77) detects the human body, the transistor is turned on to thereby generate the first detection signal.

13. The human sensor system according to any one of claims 9 to 12, wherein the one human sensor apparatus (14) further includes a third terminal section (111) for connecting the human sensor apparatus (14) to the third master set (101) to output the detection signal of the human sensor (77) as a third detection signal electrically insulated from the first detection signal and the second detection signal.

14. The human sensor system according to any one of claims 9 to 13, wherein the one human sensor apparatus (14) further includes a circuit (76) for supplying a constant operating voltage to the human sensor (77).

15. A lighting control system (1) comprising:
the human sensor system according to any one of claims 9 to 14;
a lighting control apparatus (4) connected to the human sensor system; and
plural luminaires (8) controlled by the lighting control apparatus, wherein
the lighting control apparatus (4) controls the plural luminaires on the basis of the first detection signal and the second detection signal of the one human sensor apparatus (14).
